# EUROPEAN PATENT APPLICATION

(11) **EP 0 803 337 A2**
(43) Date of publication of application: **29.10.1997**
(21) Application number: 97106118.9
(22) Date of filing: 15.04.1997
(51) Int. Cl.: B29C 33/62

(54) **Release agent compositions**

(30) Priority: 26.04.1996 JP 108046/96
(71) Applicant: HOECHST JAPAN LIMITED, Tokyo (JP)
(72) Inventor: Hoga, Takuya, Saitama (JP); Ohsawa, Hiroshi, Shizuoka (JP); Nakamura, Masaki, Shizuoka (JP); Ishida, Masaki, Shizuoka (JP)
(74) Representative: Güthlein, Paul, Dr.

(57) **Abstract**

The present invention relates to release agent compositions, more particularly to release agent compositions which enables easy releasing of a molded article from a mold during the molding of engineering plastics such as polyesters, polycarbonates and polyamides; styrene resins such as polystyrenes, ABS and AS resins; polyphenylene sulfides, modified polyphenylene oxide resins or ionomer resins, by which shortening of the molding cycle time, improvement in surface smoothness and so on can be attained.

## Description

### BACKGROUND OF THE INVENTION

### FIELD OF THE INVENTION

The present invention relates to release agent compositions, more particularly to release agent compositions which enables the easy releasing of a molded article from a mold during the molding of engineering plastics such as polyesters, polycarbonates and polyamides; styrene resins such as polystyrenes, ABS and AS resins; polyphenylene sulfides, modified polyphenylene oxide resins or ionomer resins, by which shortening of the molding cycle time, improvement in surface smoothness and so on can be attained.

### DESCRIPTION OF THE PRIOR ART

Various lubricants have been used for a long time as a release agent in the production of shaped articles from engineering plastics such as polyesters, polycarbonates and polyamides and styrene resins such as polystyrenes, ABS and AS resins, ionomer resins in order to enable the easy releasing of the shaped articles from a metallic mold. As the lubricant for this purpose, a higher fatty acid derivative, metallic soap or petroleum wax has conventionally been used.

It has been generally accepted that, when such a lubricant is used for releasing a resin from a mold, the lower the compatibility of the releasing agent with the resin, the higher is the releasing effect to be attained. However, the releasing effect of said lubricant is not sufficient for the above-mentioned molding resin, so that the amount to be used must be large enough for obtaining satisfactory releasing effect such as to shorten the cycle time, which in turn results in secondary failures such as deposition of the lubricant on a metal surface, an undesired influence on the surface smoothness of a shaped article owing to the deleterious change of the deposit, and a decrease in mechanical strengths such as tensile strength, elongation and impact resistance properties.

In this connection, JP-A-Sho63-245450 discloses an extrudable fluoroterpolymer-containing composition for a use in a polyolefin molding material. However, there is no statement in the disclosure at all as for the possibility of its application in other molding materials and as for its releasing performance in the field of injection-molding. Furthermore, it causes a significant problem in a shaping process of a resin in the case where the process is continued for a long time, that die-deposition may occur owing to scorching of the resin in the resin residence areas for example in the interior of a machine and at the edge of a die and that, when a resin composition containing a flame retardant is processed, contamination of a screw, cylinder or mold of a machine often occurs, which in turn leads to corrosion of the mold.

### SUMMARY OF THE INVENTION

The object of the present invention is therefore to obtain release agent compositions without the above-mentioned disadvantages, i.e., a composition which is excellent in releasing effect and can prevent or suppress the occurrence of die-deposition and corrosion of a mold and can be used with various molding materials.

As a result of the extensive and elaborated study of the inventors, it has now been found that the above-mentioned problems can be solved by using a fluoroterpolymer alone or in combination with one or more other customary release agents, and thus the present invention has been achieved.

Therefore, the present invention relates to release agent compositions containing a fluoroterpolymer consisting of tetrafluoroethylene, hexafluoropropylene and vinylidene fluoride, alone or in combination with one or more other customary release agents.

According to the present invention, release agent compositions can be provided by using a fluoroterpolymer component alone or in combination with a C₁₂-C₃₆-higher fatty acid derivative and/or oxidized or unoxidized polyethylene wax, which composition can reduce the releasing force in the course of a molding process and has preventive effects for die-deposition and corrosion of molds for various resins. In addition, the present invention also attains advantages provided by these effects such as shortening of the cycle time of molding, improvement in surface smoothness, reduction of energy and improvement in working efficiency.

### BRIEF DRAWING OF THE DRAWING

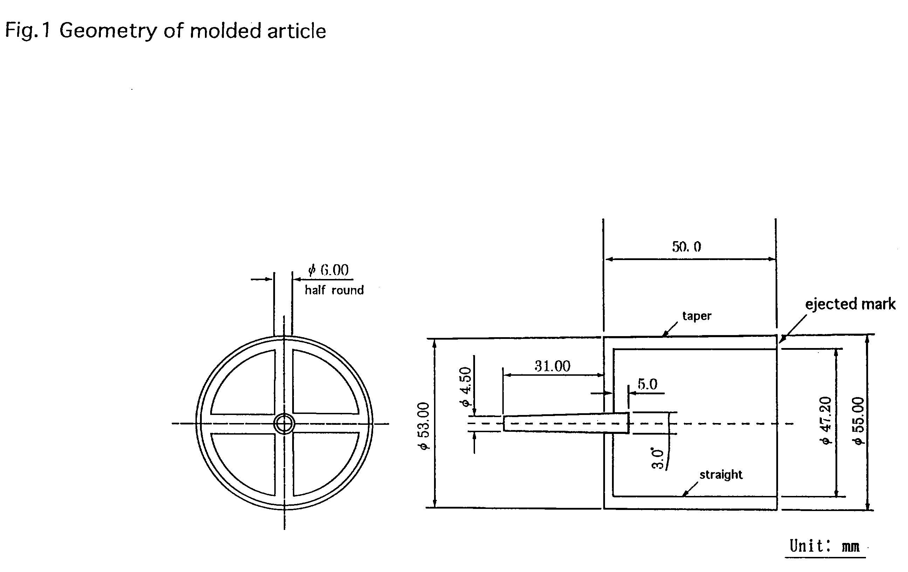

Fig.1 represents the geometry of the article molded in the releasability test.

### DETAILED DESCRIPTION OF THE INVENTION

The fluoroterpolymer used in the release agent compositions according to the present invention is commercially available, and, among others, it is preferable to use those having a number-average molecular weight (GPC) of from 50,000 to 400,000, a softening point of from 100 to 300°C, in particular from 110 to 230°C and a fluorine content of not less than 50% by weight, in particular of not less than 66% by weight. Greater preference is given, for example, to such terpolymers as those commercially available under the name ®Hostamont VP FN 901 of Hoechst AG.

As mentioned above, the composition of the fluoroterpolymer according to the present invention can be used alone but, where appropriate, may contain one or more other customary release components. Such customary components are, for example, vegetable waxes such as carnauba wax and rice wax, animal waxes such as beeswax and lanolin, mineral waxes such as montan wax, petroleum waxes such as paraffin waxes and polyethylene waxes, fats and fatty oils waxes such as castor oil and its derivatives and fatty acids and their derivatives, and preferably at least one polyethylene wax selected from the group consisting of higher fatty acid derivatives, oxidized and unoxidized polyethylene waxes.

As the higher fatty acid derivative, preference is given to, for example, a C₁₂-C₃₆-higher fatty acid such as lauric acid, myristic acid, palmitic acid, stearic acid, behenic acid and montanic acid; an ester of said higher fatty acid with monohydric or polyhydric alcohol; a partially saponified ester obtained by partial saponification of said higher fatty acid ester with a metal oxide or metal hydroxide such as Ca(OH)₂, NaOH, Mg(OH)₂, Zn(OH)₂, LiOH, Al(OH)₃; or a corresponding completely saponified product of the higher fatty acid with the metal oxide or metal hydroxide; a combined ester obtained by condensation of esters of the higher fatty acid with polyhydric alcohol by means of a dicarboxylic acid such as adipic acid as a linking component; a mono- or diamide obtained from the higher fatty acid and mono- or diamine. One or more of these lubricant components can be formulated with the fluoroterpolymer in a specific ratio and can be used in an amount of not more than 95% by weight based on the weight of the whole composition.

As the oxidized or unoxidized polyethylene wax which is also referred to as "polyethylene wax component" here, preference is given to, for example, those having a number average molecular weight measured by GPC of from 1,000 to 10,000, an acid number of from 0 to 70 and a melting point measured by DSC of from 100 to 135 °C. One or more of these polyethylene waxes can be formulated in a specific ratio and can be used in the composition according to the present invention in an amount of not more than 95% by weight based on the weight of the whole composition.

In the embodiments according to the present invention where those other customary components are used, the total amount of said higher fatty acid, oxidized and/or unoxidized polyethylene waxes must not be more than 95% by weight based on the weight of the whole composition because the releasing effect and preventive effects for die-deposition and corrosion of a mold become insufficient if the amount is so exceeded. Therefore, in these embodiments, the total amount of the other customary components is, in general, not more than 95% by weight based on the weight of the whole composition. Such release agent compositions according to the present invention can be prepared in a simple manner, for example, by mixing pulverulent components in a high speed mixer such as Henschel mixer.

The release agent compositions according to the present invention is particularly suitable for a use in the molding of engineering plastics such as polyesters, polycarbonates and polyamides; styrene resins such as polystyrenes, ABS and AS resins; polyphenylene sulfides, modified polyphenylene oxides or ionomer resins, and is mixed with the molding material and then kneaded in an extruder or externally added to pellets made from the molding material in an amount of from 0.01 to 5% by weight, preferably from 0.05 to 2% by weight based on the weight of the whole molding compound. In this connection, the releasing effect can be attained even in the first run by such conditioning in which a kneaded product of a base polymer with from 0.5 to 2.0% by weight of the fluoroterpolymer is preliminarily passed through a machine before the molding process, or the composition is dissolved in a solvent such as methylethylketon and ethyl acetate and then the solution thus obtained is previously applied or spray-coated over a mold to form a protective film by heat-setting at temperature of from 120 to 140°C for 10 minutes. Furthermore, the molding material can optionally be formulated with various additives such as anti-oxidants, ultraviolet light absorbers, light stabilizers, antistatic agents and flame retardants; various colorants such as dyes and pigments; and various fillers such as glass fibers, talc and calcium carbonate.

It is considered that the fluoroterpolymer, which is the indispensable component for the composition according to the present invention, has a low compatibility with a base resin and high adhesiveness with a metal and, therefore, migrates into the surface of the resin and forms a thin film over the surface of the mold in the course of the molding process by which it increases the releasability of the resin. In addition, the composition according to the present invention does not contribute to contamination of a mold since "build-up", which increases the thickness of the film once formed over the surface of the mold, does not occur. On the contrary, the composition has such advantage that the deposition of substances causing said contamination and further corrosion owing to corrosive substances such as retardants can be prevented. Furthermore, formation of die-deposits, which occurs mainly owing to the internal resin stagnation in an extruder, can be prevented so that a prolonged running time becomes possible. Thus, its high releasing effect and preventive effects for die-deposition and corrosion of a mold lead to such advantages as shortening of the shaping cycle time, improvement in aspect qualities of a molded article such as surface smoothness, reduction of energy such as electrical power needed for a molding process and saving of labor.

The present invention will now be described in more detail by way of Examples and Comparative examples.

### Examples

The force required for releasing (hereinafter referred to as releasing force) was measured as follows:
Various resins were homogeneously melt-mixed with the compositions in different ratios by means of a twin-screw extruder and formed into pellets. The pellets obtained were mixed with a resin so as to achieve a desired mixed amount, molded into the article shown in Fig.1 through an injection molding machine and then the ejection force required for taking out the molded article from the mold was measured by using a sensor.

The fluoroterpolymer used here was ®Hostamont VP FN 901 (Hoechst AG) having a softening point of about 125°C, a number average molecular weight (GPC) of about 200,000 and a fluorine content of about 72% by weight. The mold used was made from iron and chrome-plated and has the geometry corresponding to the article shown in Fig.1 (custom-made mold from Sanjo Seiki Co., Ltd.).

For measurement of the releasing force for a resin system containing the fluoroterpolymer, the surface of the mold was pretreated in the conditioning process by molding 2kg of a resin containing only 0.5 parts of the fluoroterpolymer, after which the practical releasing force was measured.

### Example 1

The releasing force was measured in the following condition using ABS-polyamide resin (®Maxloy AK 102, Japan Synthetic Rubber Co., Ltd.).
Cylinder temperature: 230-240-250°C
Mold temperature: 50°C
Cooling time: 20 seconds
The results are shown in Table 1.

### Comparative Example 1

Measurement corresponding to Example 1 was carried out except for the changes as mentioned below in the type and amount of the additive. The results are summarized in Table 1.

**Table 1**

| | | Releasing force(N) | % based on control |
|---|---|---|---|
| Ex. | 1(a) | 2250 | 100.0 |
| | 1(b) | 1246 | 55.1 |
| | 1(c) | 1280 | 56.9 |
| | 1(d) | 1380 | 61.3 |
| | 1(e) | 1350 | 55.5 |
| | 1(f) | 1190 | 52.9 |
| Comp.Ex. | 1(g) | 1720 | 76.4 |
| | 1(h) | 1565 | 69.6 |
| | 1(i) | 1570 | 69.8 |
| 1(a): resin only (without additive as control) 1(b): resin containing 0.1 parts of fluoroterpolymer 1(C): resin containing 0.06 parts of fluoroterpolymer 1(d): resin containing 0.02 parts of fluoroterpolymer and 0.2 parts of partially saponified ester wax of montanic acid 1(e): resin containing 0.02 parts of fluoroterpolymer and 0.2 parts of stearic acid ester 1(f): resin containing 0.02 parts of fluoroterpolymer and 0.2 parts of oxidized polyethylene wax 1(g): resin containing 0.3 parts of partially saponified wax of montanic acid 1(h): resin containing 0.3 parts of stearic acid ester 1(i): resin containing 0.3 parts of oxidized polyethylene wax | | | |

### Example 2

The releasing force was measured in the following condition for ABS-polyamide resin containing 20% of glass fiber (®Maxloy AK 602 G20, Japan Synthetic Rubber Co., Ltd.).
Cylinder temperature: 230-240-250°C
Mold temperature: 50°C
Cooling time: 20 seconds
The results are shown in Table 2.

### Comparative Example 2

Measurement corresponding to Example 2 was carried out except for the changes as mentioned below in the type and amount of the additive. The results are shown in Table 2.

**Table 2**

| | | Releasing force(N) | % based on control |
|---|---|---|---|
| Ex. | 2(a) | 2080 | 100.0 |
| | 2(b) | 1470 | 70.7 |
| | 2(c) | 1500 | 72.1 |
| | 2(d) | 1140 | 54.8 |
| Comp.Ex. | 2(e) | 1565 | 75.2 |
| 2(a): resin only (without additive as control) 2(b): resin containing 0.1 parts of fluoroterpolymer 2(c): resin containing 0.06 parts of fluoroterpolymer 2(d): resin containing 0.04 parts of fluoroterpolymer and 0.3 parts of ester of montanic acid with stearyl alcohol 2(e): resin containing 0.3 parts of ester of montanic acid with stearyl alcohol | | | |

### Example 3

The releasing force was measured in the following condition for ABS-polybutylene terephthalate resin (®Maxloy BK101, Japan Synthetic Rubber Co., Ltd.).
Cylinder temperature: 230-240-250°C
Mold temperature: 50°C
Cooling time: 20 seconds
The results are shown in Table 3.

### Comparative Example 3

Measurement corresponding to Example 3 was carried out except for the changes as mentioned below in the type and amount of the additive. The results are shown in Table 3.

**Table 3**

| | | Releasing force(N) | % based on control |
|---|---|---|---|
| Ex. | 3(a) | 1820 | 100.0 |
| | 3(b) | 1400 | 76.9 |
| | 3(c) | 1430 | 78.6 |
| | 3(d) | 1420 | 78.0 |
| Comp.Ex | 3(e) | 1550 | 85.2 |
| | 3(f) | 1630 | 89.6 |
| | 3(g) | 1605 | 88.2 |
| 3(a): resin only (without additive as control) 3(b): resin containing 0.02 parts of fluoroterpolymer and 0.2 parts of partially saponified ester wax of montanic acid 3(c): resin containing 0.02 parts of fluoroterpolymer and 0.3 parts of ester of montanic acid with ethylene glycol 3(d): resin containing 0.02 parts of fluoroterpolymer and 0.2 parts of ester of montanic acid with stearyl alcohol 3(e): resin containing 0.3 parts of partially saponified ester wax of montanic acid 3(f): resin containing 0.3 parts of ester of montanic acid with ethylene glycol 3(g): resin containing 0.3 parts of ester of montanic acid with stearyl alcohol | | | |

### Example 4

The releasing force was measured in the following condition for ABS-polycarbonate resin (®Excelloy CB10, Japan Synthetic Rubber Co., Ltd.).
Cylinder temperature: 230-240-250°C
Mold temperature: 60°C
Cooling time: 20 seconds
The results are shown in Table 4.

### Comparative Example 4

Measurement corresponding to Example 4 was carried out except for the following changes in the type and amount of the additive. The results are shown in Table 4.

**Table 4**

| | | Releasing force (N) | % based on control |
|---|---|---|---|
| Ex. | 4(a) | 2900 | 100.0 |
| | 4(b) | 1850 | 63.8 |
| | 4(c) | 1980 | 68.3 |
| | 4(d) | 2230 | 76.9 |
| | 4(e) | 2110 | 72.8 |
| Comp.Ex. | 4(f) | 2350 | 81.0 |
| | 4(g) | 2275 | 78.4 |
| 4(a): resin only (without additive as control) 4(b): resin containing 0.1 parts of fluoroterpolymer 4(c): resin containing 0.06 parts of fluoroterpolymer 4(d): resin containing 0.02 parts of fluoroterpolymer and 0.2 parts of partially saponified ester wax of montanic acid 4(e): resin containing 0.02 parts of fluoroterpolymer and 0.3 parts of ester of montanic acid with ethylene glycol 4(f): resin containing 0.3 parts of partially saponified ester wax of montanic acid 4(g): resin containing 0.3 parts of ester of montanic acid with ethylene glycol | | | |

### Example 5

The releasing force was measured in the following condition for polycarbonate resin (®Iupiron S 2001, Mitsubishi Engineering-plastics Corporation).
Cylinder temperature: 270-280-290°C
Mold temperature: 60°C
Cooling time: 20 seconds
The results are shown in Table 5.

### Comparative Example 5

Measurement corresponding to Example 5 was carried out except for the following changes in the type and amount of the additive. The results are shown in Table 5.

**Table 5**

| | | Releasing force (N) | % based on control |
|---|---|---|---|
| Ex. | 5(a) | 1880 | 100.0 |
| | 5(b) | 1420 | 75.5 |
| | 5(c) | 1460 | 77.7 |
| | 5(d) | 1280 | 68.1 |
| | 5(e) | 1020 | 54.3 |
| | 5(f) | 1130 | 60.1 |
| Comp.Ex. | 5(g) | 1360 | 72.3 |
| | 5(h) | 1230 | 65.4 |
| | 5(i) | 1460 | 77.7 |
| 5(a): resin only (without additive as control) 5(b): resin containing 0.1 parts of fluoroterpolymer 5(c): resin containing 0.06 parts of fluoroterpolymer 5(d): resin containing 0.02 parts of fluoroterpolymer and 0.2 parts of ethylene glycol ester of montanic acid 5(e): resin containing 0.02 parts of fluoroterpolymer and 0.2 parts of glycerin ester of higher fatty acid 5(f): resin containing 0.02 parts of fluoroterpolymer and 0.2 parts of oxidized polyethylene wax 5(g): resin containing 0.3 parts of ester of montanic acid with ethylene glycol 5(h): resin containing 0.3 parts of glycerin ester of higher fatty acid 5(i): resin containing 0.3 parts of oxidized polyethylene wax | | | |

### Example 6

The releasing force was measured in the following condition for polycarbonate-polyethylene terephthalate resin (®Panlite AM 9022, Teijin Limited).
Cylinder temperature: 260-270-280°C
Mold temperature: 60°C
Cooling time: 20 seconds
The results are shown in Table 6.

### Comparative Example 6

Measurement corresponding to Example 6 was carried out except for the following changes in the type and amount of the additive. The results are shown in Table 6.

**Table 6**

| | | Releasing force (N) | % based on control |
|---|---|---|---|
| Ex. | 6(a) | 1280 | 100.0 |
| | 6(b) | 1005 | 78.5 |
| | 6(c) | 1000 | 78.1 |
| Comp.Ex. | 6(d) | 1130 | 88.3 |
| | 6(e) | 1105 | 86.3 |
| 6(a): resin only (without additive as control) 6(b): resin containing 0.02 parts of fluoroterpolymer and 0.3 parts of partially saponified ester wax of montanic acid 6(c): resin containing 0.02 parts of fluoroterpolymer and 0.2 parts of ester of montanic acid with 1,1,1-trihydroxymethylpropane 6(d): resin containing 0.3 parts of partially saponified ester wax of montanic acid 6(e): resin containing 0.3 parts of ester of montanic acid with 1,1,1-trihydroxymethylpropane | | | |

### Example 7

The releasing force was measured in the following condition for polycarbonate-polybutylene terephthalate resin (®Panlite GM 8115, Teijin Limited).
Cylinder temperature: 260-270-280°C
Mold temperature: 60°C
Cooling time: 20 seconds
The results are shown in Table 7.

### Comparative Example 7

Measurement corresponding to Example 7 was carried out except for the following changes in the type and amount of the additive. The results are shown in Table 7.

**Table 7**

| | | Releasing force (N) | % based on control |
|---|---|---|---|
| Ex. | 7(a) | 490 | 100.0 |
| | 7(b) | 340 | 69.4 |
| | 7(c) | 340 | 69.4 |
| Comp.Ex. | 7(d) | 380 | 77.6 |
| | 7(e) | 390 | 79.6 |
| 7(a): resin only (without additive as control) 7(b): resin containing 0.02 parts of fluoroterpolymer and 0.2 parts of ester of montanic acid with ethylene glycol 7(c): resin containing 0.02 parts of fluoroterpolymer and 0.2 parts of ester of montanic acid with higher fatty alcohol 7(d): resin containing 0.3 parts of ester of montanic acid with ethylene glycol 7(e): resin containing 0.3 parts of ester of montanic acid with higher aliphatic alcohol | | | |

### Example 8

The releasing force was measured in the following condition for polybutylene terephthalate resin (®Duranex 3300, Polyplastics).
Cylinder temperature: 230-240-250°C
Mold temperature: 60°C
Cooling time: 20 seconds
The results are shown in Table 8.

### Comparative Example 8

Measurement corresponding to Example 8 was carried out except for the following changes in the type and amount of the additive. The results are shown in Table 8.

**Table 8**

| | | Releasing force (N) | % based on control |
|---|---|---|---|
| Ex. | 8(a) | 3970 | 100.0 |
| | 8(b) | 1930 | 48.6 |
| | 8(c) | 2430 | 61.2 |
| | 8(d) | 1600 | 40.3 |
| | 8(e) | 1630 | 41.1 |
| | 8(f) | 1350 | 34.0 |
| Comp.Ex. | 8(g) | 2055 | 51.8 |
| | 8(h) | 2030 | 51.1 |
| | 8(i) | 1920 | 48.4 |
| 8(a): resin only (without additive as control) 8(b): with 0.1 parts of fluoroterpolymer 8(c): with 0.06 parts of fluoroterpolymer 8(d): resin containing 0.02 parts of fluoroterpolymer and 0.2 parts of partially saponified ester wax of montanic acid 8(e): resin containing 0.02 parts of fluoroterpolymer and 0.2 parts of ester of montanic acid with glycerin 8(f): resin containing 0.02 parts of fluoroterpolymer and 0.2 parts of ester of montanic acid with higher aliphatic alcohol 8(g): resin containing 0.3 parts of partially saponified ester wax of montanic acid 8(h): resin containing 0.3 parts of ester of montanic acid with glycerin 8(i): resin containing 0.3 parts of ester of montanic acid with higher aliphatic alcohol | | | |

### Example 9

The preventive effect for die-deposition was assessed by comparative inspection according to the following method.

A flame retardant-containing ABS resin (®Diapet ABS VP-1, Mitsubishi Rayon Co., Ltd.) without any additive was continuously extruded for 8 hours though a twin-screw extruder, after which the extruder was disassembled and the screws were visually inspected [9(a)](comparative example).

Subsequently, the surfaces of the screws were cleaned, after which new retardant-containing ABS resin of the same type and 0.03% of the fluoroterpolymer (®Hostamont VP FN 901) were mixed in a tumbling mixer and then formed into pellets.

After the same pretreatment, the conditioning was carried out using a 0.5% FN-901-containing masterbatch kneaded in a twin-screw extruder (see above description of the measurement of the releasing force) and then the dry blend pellets prepared above were continuously extruded for 8 hours in an extruder and the extruder used was disassembled for inspection in the same way as the blank [9(b)].
Cylinder temperature: 220-230-230°C
Flow rate of resin: 20 kg/h

| | Amount of FN-901 (Wt %) | Deposition (visual inspection) |
|---|---|---|
| 9(a) | 0 | found |
| 9(b) | 0.03 | not found |

### Example 10

The surface of a mold was conditioned using a masterbatch containing 0.5% of the terfluoroterpolymer prepared by the method described in Example 9.

Subsequently, 400 shots were molded in a injection molding machine in the same method as the case of measurement of the releasing force using a dry blend product prepared in the same method as described in Example 9 from the retardant-containing ABS resin and 0.03% of the fluoroterpolymer. The mold used was left to stand at room temperature for 7 days and the surface of the mold was visually inspected [10(b)].

Furthermore, after the surface of the mold had been cleaned, 400 shots were molded using the flame retardant-containing ABS resin as a blank. The mold used here was similarly left to stand for 7 days and the state of its surface was inspected [10(a)](comparative example).
Cylinder temperature: 220-230-230°C
Mold temperature: 60°C
Cooling time: 20 seconds
Humidity: about 40%

| | Amount of FN-901 (wt%) | State of corrosion (visual inspection) |
|---|---|---|
| 10(a) | 0 | partial discoloration owing to corrosion |
| 10(b) | 0.03 | not found |

## Claims

1. Release agent compositions comprising a fluoroterpolymer consisting of tetrafluoroethylene, hexafluoropropylene and vinylidene fluoride, alone or in combination with at least one other customary release agent.

2. Release agent compositions as claimed in Claim 1, which contains, based on the weight of the whole composition, not more than 95 % by weight of a higher fatty acid derivative component and/or not more than 95 % by weight of at least one polyethylene wax component selected from an oxidized polyethylene wax and an unoxidized polyethylene wax, the total amount of the higher fatty acid derivative component plus polyethylene wax component being not more than 95 % by weight.

3. Release agent compositions as claimed in Claim 1, wherein the fluoroterpolymer to be used has a number average molecular weight determined by gel permeation chromatography (GPC) of from 50,000 to 400,000 and a fluorine content of more than 50 % by weight.

4. Release agent compositions as claimed in Claim 1, wherein the higher fatty acid derivative component to be used comprises at least one substance selected from the group consisting of a C₁₂-C₃₆-higher fatty acid, its ester, its partially saponified ester, its wholly saponified ester and its monoamide and bisamide.

5. Release agent compositions as claimed in Claim 1, wherein the polyethylene wax has a number average molecular weight of from 1,000 to 10,000 and an acid number of from 0 to 70.

6. A molding compound based on polyesters, polycarbonates, polyamides, polystyrenes, ABS and AS resins, polyphenylene sulfides, modified polyphenylene oxides or ionomer resins, which contains the release agent compositions as claimed in Claim 1.

7. A molding compound as claimed in Claim 6, which contains the release agent compositions in an amount of from 0.01 to 5 % by weight.
